# EUROPEAN PATENT SPECIFICATION

(11) **EP 0 298 463 B1**
(45) Date of publication and mention of the grant of the patent: **19.05.1993**
(21) Application number: 88110810.4
(22) Date of filing: 06.07.1988
(51) Int. Cl.: G01N 27/12

(54) **Vaporizable liquid detection element**
Element zum Nachweis einer verdampfbaren Flüssigkeit
Elément de détection d'un liquide évaporable

(30) Priority: 09.07.1987 JP 171807/87
(43) Date of publication of application: 11.01.1989
(73) Proprietor: JUNKOSHA CO. LTD., Setagaya-ku Tokyo 156 (JP)
(72) Inventor: Akiba, Jyuji c/o Junkosha Co.,Ltd., Tokyo (JP); Kojima, Kazuyuki c/o Junkosha Co.,Ltd., Tokyo (JP); Sugibuchi, Hiroyuki c/o Junkosha Co.,Ltd., Tokyo (JP); Satoh, Hiroshi c/o Junkosha Co.,Ltd., Tokyo (JP)
(74) Representative: Kehl, Günther, Dipl.-Phys.

(56) References cited:
- DE-A- 2 809 873
- FR-A- 2 204 304
- US-A- 4 454 249
- US-A- 4 663 614
- JOURNAL OF APPLIED PHYSICS, vol. 60, no. 3, August 1986, pages 1074-1079, Woodbuty, NY, US; B. LUNDBERG et al.: "Resistivity of a composite conducting polymer as a function of temperature, pressure, and environment: Applications as a pressure and gas concentration transducer"
- PATENT ABSTRACTS OF JAPAN, vol. 6, no. 85 (C-103)(963), 22th May 1982; & JP-A-571870
- PATENT ABSTRACTS OF JAPAN, vol. 3, no. 87 (C-53), 25th July 1979; & JP-A-5463171

## Description

The present invention relates to a discrimination apparatus for vaporizable liquids, which is used, for example, in an oil feeder at the gas service station dealing with different kinds of oils such as gasoline, light oil and kerosine, etc. in order to prevent erroneous oil feeding.

US-A-4 663 614 discloses a detector system for hydrocarbons comprising a detection element formed by bridging at least a pair of electrodes with a gas sensible member comprising a resin material and including an electrically conductive substance, wherein the gas sensible member shows changes of impedance when in contact with the vaporized gas of the liquid to be detected and discriminated.

Furthermore, the article "Resistivity of a composite conducting polymer as a function of temperature, pressure, and environment: Applications as a pressure and gas concentration transducer" of Journal of Applied Physics, Vol. 60, No. 3, August 1986, pages 1074-1079, Woodbuty, NY, US; B. Lundberg et al. describes measurements of resistivity of a composite conducting copolymer as a function of temperature, pressure and exposure to solvents and hydrocarbons.

US-A-4 454 249 describes the production of reinforced easily moldable plastics wherein particles of stretched porous polymer are incorporated into a plastic molding resin material to improve its physical properties.

The detection element disclosed in US-A-4 663 614 requires considerable time to be reset for reuse after it has come in contact with the chemical to be detected.

DE-A-2 809 873 discloses a method for detection of combustion gases in the air. In order exclude slowly changing signals from triggering an alarm it is proposed to measure the change of impedance. A slow change of impedance can be caused by influence of room heating or change of moisture etc.. In case of a fire, however, combustion gases appear abruptly and cause a rapid change of impedance of the measuring device so that in this case an alarm will be correctly triggered. So according to this known method the actual rate of change of the gas concentration of combustion gases in the air is being measured.

It is the object of the present invention to develop a discrimination apparatus for vaporizable liquids which is capable of detecting several kinds of oils without it being necessary to have direct contact with the liquid. The detection element should be able to be reset for reuse within a short period of time.

According to the present invention the above-mentioned object is achieved by providing measuring means for providing an output representing the rate of change of the impedance of the detection element and a discriminating means for deriving from the output the nature of the vaporizable liquid.

According to the present invention, as explained earlier, the vaporizable liquid detection element has the structure that at least a pair of electrodes are bridged by a gas sensible member made of a resin material including a conductive substance. Therefore, for example, the molecules of oil element volatiled from oil penetrate into said gas sensible member and surround the particles of the conductive substance preventing electrical continuity of the vaporizable liquid detection element and thereby the resistance value or impedance value between the electrodes increases. An impedance detected by the measuring means or its function value is transmitted to the discriminating means. The increment of the impedance value has a positive correlation with the number of molecules of oil surrounding particles of said conductive substance and the increment of gasoline having high volatility rises sharply in comparison with that of light oil and kerosene. A degree of volatility which is different depending on the kind of oil shows a particular impedance value under the constant condition. Therefore, a certain kind of oil can be discriminated by comparing the impedance value in case the vaporizable liquid detection element is placed in the volatile gas ambience with the precedingly measured sample value or by deciding whether such impedance value has exceeded the constant threshold value or not or in accordance with a value such as integral value or differential value (variation rate).

One way of carrying out the invention is described in detail below with reference to drawings which illustrate only one specific embodiment, in which
Fig. 1 is perspective view of a vaporizable liquid detection element of the present invention and
Fig. 2 is a block diagram for explaining the concept of the present invention of the vaporizable liquid discriminating apparatus by the present invention.

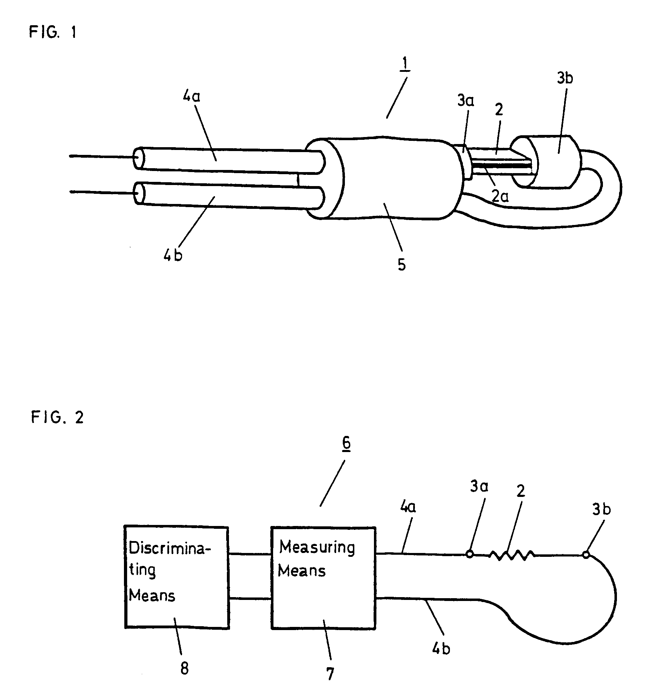

By referring to Fig. 1, a sensor 2 is connected with a lead wire 4a through the connecting part 3a at the one end and with a lead wire 4b through the connecting part 3b at the other end. A pair of lead wires 4a, 4b are integrated by an outer sheath 5 consisting of a thermally contractible tube, forming a vaporizable liquid detecting element 1.

The sensor 2 is explained hereunder in further detail. First, extruded material is formed by adding and kneading a liquid lubricating agent such as white oil, solvent-naphta, xylene, alcohol, ester, silicone-oil of about 10-50 wt %, preferably 12-20 wt % and most preferably 20 wt % to the mixture of the carbon powder such as carbon black of 10 - 50 wt % and the tetrafluoride ethylene resin (hereinafter referred to as PTFE) powder and then molding such mixture. The extruded material is expanded up to about 1 - 15 times at least in the one direction under the temperature of about 327°C to form a conductive tape. The expansion is achieved by winding the extruded PTFE-tape between drums with higher circumferential speed than the extrusion speed. Thereafter, a porous PTFE tape is adhered to both sides of the conductive tape for the protection purpose. Here, as the conductive tape, unbaked or incompletely baked solid PTFE may also be used as well as the unbaked or incompletely baked rolled and extended porous PTFE tape.

The mixture of PTFE powder, carbon powder and lubricating agent can be prepared in three different alternative ways:
- Way 1:: PTFE-powder and carbon powder are mixed in a rotating mixing machine, then the agent is added.
- Way 2:: PTFE-powder, the mixture of carbon powder and lubricating agent are put into a V-shaped blender. Then it is mixed and an extruding billet is formed.
- Way 3:: Carbon powder is put into a PTFE-dispersion (with a solvent). During agitating them the mixture of PTFE and carbon come up to the surface. The mixture is desiccated and mixed with the agent.

The PTFE tape has the critical surface tension which is smaller than that of water but is larger than that of oil. Therefore, such PTFE tape has the function to repel water and absorb molecules of vaporized oil. Accordingly, when the vaporizable liquid detection element 1 is placed in the ambience including oil, the molecules of the vaporized oil enter the gas sensible part 2a passing through the PTFE tape and penetrate into the electrical linkage of carbon black particles forming the gas sensible part 2a, increasing the electrical resistance (impedance) of the gas sensible part 2a.

Such increase of impedance is detected by the measuring means 7 indicated in Fig. 2 as an increase of impedance between the lead wires 4a, 4b connected electrically with both ends of sensor 2. With increase of impedance detected by the measuring means 7, a certain kind of oil is discriminated by comparing the impedance increasing rate per unit time with a preset reference changing rate of respective oils by the discriminating means 8 connected with the measuring means 7 as the circuit, or detecting an excess over the constant threshold value determined respectively for oils, or others.

As explained previously, according to the present invention, since the vaporizable liquid detecting element has the structure that at least a pair of electrodes are bridged by the gas sensible member consisting of resin material including the conductive substance, the molecules of oil vaporized from oil enter the gas sensible member surrounding the particles of said conductive substance and preventing electrical continuity of the vaporizable liquid element. Therefore, an impedance value between the electrodes increases and such impedance change is detected by the measuring means. The oil having higher volatility is vaporized with in a shorter period of time, increasing the impedance value. Thereby, a certain kind of oil can be discriminated by presetting a changing rate per time of every oil to the discriminating means, or providing a constant threshold value or others.

Moreover, since the detecting element of the present invention detects the molecules of vaporized oil, the oil element having entered the conductive substance in the gas sensible part is vaporized and the impedance value of the vaporizable liquid detecting element is reset to the initial value.

Namely, the present invention discloses a vaporizable liquid detecting element and a vaporizable liquid discriminating apparatus utilizing the same which is capable of sensing a certain kind of oil such as gasoline, light oil or kerosene within a short period of time and can be reset quickly for reuse. Therefore the present invention provides a means which prevents erroneous oil feeding at the gas service station, making much contribution to prevention of disaster and assurance for safe operation.

## Claims

1. A discrimination apparatus for vaporizable liquids, comprising a detection element (1) formed by bridging at least a pair of electrodes (4a, 4b) with a gas sensible member (2a) comprising a resin material and including an electrically conductive substance, wherein the gas sensible member shows changes of impedance when in contact with the vaporized gas of the liquids to be detected an discriminated, **characterized** by a measuring means (7) providing an output representing the rate of change of the impedance of the detection element, and a discriminating means comparing the impedance increasing rate as a function of time with a preset reference changing rate of respective vaporizable liquids for deriving from the output the nature of the vaporizable liquid.

2. Apparatus according to claim 1, characterized in that the conductive substance of said gas sensible member (2a) is carbon powder.

3. Apparatus according to claims 1 or 2, characterized in that the resin material is unbaked tetrafluoride ethylene resin forming material.

4. Apparatus according to claims 1 or 2, characterized in that the resin material is incompletely baked tetrafluoride ethylene resin forming material.

5. Apparatus according to claims 1 or 2, characterized in that the resin material is unsintered expanded porous tetrafluoride ethylene resin composing material.

6. Apparatus according to claims 1 or 2, characterized in that the resin material is incompletely sintered porous polytetrafluoroethylene.

## Patentansprüche

1. Gerät zum Nachweis verdampfbarer Flüssigkeiten mit einem Detektorelement (1), das ein an ein Elektrodenpaar (4a, 4b) angeschlossenes gasempfindliches Teil (2a) aufweist, das ein Harzmaterial und eine elektrisch leitende Substanz enthält, wobei das gasempfindliche Teil impedanzänderungen zeigt, wenn es mit Dämpfen der nachzuweisenden Flüssigkeiten in Berührung kommt, gekennzeichnet durch Meßmittel (7), die ein Ausgangssignal liefern, das repräsentativ für die Geschwindigkeit der Impedanzänderung des Detektorelements ist, und Diskriminatormittel, die die Geschwindigkeit der Impedanzvergrößerung als Funktion der Zeit mit einem vorgegebenen Referenzwert für die Änderungsgeschwindigkeit der jeweiligen verdampfbaren Flüssigkeit vergleichen, um daraus die Art der verdampfbaren Flüssigkeit abzuleiten.

2. Gerät nach Anspruch 1, dadurch gekennzeichnet, daß die leitende Substanz des gasempfindlichen Teils (2a) Kohlenstoffpulver ist.

3. Gerät nach Anspruch 1 oder 2, dadurch gekennzeichnet, daß das Harzmaterial ungehärtetes Tetrafluorethylenharz-Formmaterial ist.

4. Gerät nach Anspruch 1 oder 2, dadurch gekennzeichnet, daß das Harzmaterial unvollständig hitzegehärtetes Tetrafluorethylenharz-Formmaterial ist.

5. Gerät nach Anspruch 1 oder 2, dadurch gekennzeichnet, daß das Harzmaterial ungesintertes expandiertes poröses Tetrafluorethylenharz-Verbundmaterial ist.

6. Gerät nach Anspruch 1 oder 2, dadurch gekennzeichnet, daß das Harzmaterial unvollständig gesintertes poröses Polytetrafluorethylen ist.

## Revendications

1. Dispositif de discrimination pour liquides évaporables, comprenant un élément de détection (1) réalisé en pontant au moins une paire d'électrodes (4a, 4b) avec un élément sensible aux gaz (2a) constitué d'un matériau à base de résine et incluant une substance conductrice de l'électricité, dans lequel l'élément sensible aux gaz présente des variations d'impédance lorsqu'il est en contact avec le gaz évaporé des liquides à détecter et à discriminer, caractérisé par un moyen de mesure (7) fournissant une sortie représentant la vitesse de variation de l'impédance de l'élément de détection, et un moyen de discrimination comparant la vitesse d'augmentation de l'impédance en fonction du temps avec une référence préétablie de vitesse de variation des liquides évaporables respectifs pour déduire de la sortie la nature du liquide évaporable.

2. Dispositif selon la revendication 1, caractérisé en ce que la substance conductrice dudit élément sensible aux gaz (2a) est de la poudre de carbone.

3. Dispositif selon la revendication 1 ou 2, caractérisé en ce que la matière à base de résine est une matière de formation de résine de tétrafluoroéthylène crue.

4. Dispositif selon la revendication 1 ou 2, caractérisé en ce que la matière à base de résine est une matière de formation de résine de tétrafluoroéthylène cuite de manière incomplète.

5. Dispositif selon la revendication 1 ou 2, caractérisé en ce que la matière à base de résine est une matière de formation de résine de tétrafluoroéthylène poreuse expansée non polymérisée.

6. Dispositif selon la revendication 1 ou 2, caractérisé en ce que la matière à base de résine est du polytétrafluoroéthylène poreux polymérisé de manière incomplète.
